# EUROPEAN PATENT APPLICATION

(11) **EP 4 723 435 A1**
(43) Date of publication of application: **08.04.2026**
(21) Application number: 24819333.6
(22) Date of filing: 05.06.2024
(51) Int. Cl.: H02K 3/38

(54) **MOTOR STATOR AND ELECTRIC COMPRESSOR PROVIDED WITH MOTOR STATOR**

(30) Priority: 05.06.2023 JP 2023092026
(71) Applicant: Valeo Electrification, 95892 Cergy Pontoise (FR)
(72) Inventor: SAGA, Satish, Chennai, Tamil Nadu 600130 (IN); JAGADEESWARARAO, Charansai, Chennai, Tamil Nadu 600130 (IN); MENDEL, Ivan, 10800 Prague (CZ); HADAS, Rostislav, 10800 Prague (CZ); BELLET, Augustin, 78320 Le Mesnil-Saint-Denis (FR); KHANCHOUL, Mohamed, 78320 Le Mesnil-Saint-Denis (FR); GUPTA, Sumitkumar, Chennai, Tamil Nadu 600130 (IN)
(74) Representative: Valeo Powertrain Systems
(86) International application number: PCT/JP2024/020438
(87) International publication number: WO 2024/253105

(57) **Abstract**

[Problem] To prevent falling-off of a cover that ensures the insulation between the coil en d of a coil of a stator and a housing. [Solution] A stator 103 comprises: an insulator 120 provided on an end surface 110a of a stator core 110; coils 141 wound around the teeth 1 12 of the stator core 110; a jumper wire 142 connecting the coils 141 to each other and 1 ying along an outer peripheral surface 120d of the insulator 120; and a cover 210 coverin g the jumper wire 142. A cylindrical body 211 of the cover 210 is locked by a locking mechanism 220 while covering the outer peripheral surface 120d of the insulator 120. The locking mechanism 220 comprises: a locking protrusion 221 protruding from the outer peri pheral surface 120d of the insulator 120; and an elastic part 223 provided in the cylindrica l body 211 and having a locking recess 222.

## Description

### [Technical Field]

The present invention relates to improved technology in a motor stator and an electric com pressor comprising the motor stator.

### [Background Art]

A stator core that forms part of a stator in a well-known inner rotor-type brushless motor is formed with a toric yoke and a plurality of teeth protruding radially inward from the yo ke, whereby a plurality of slots communicating in an axial direction are provided between the plurality of teeth.

Insulators comprising an insulating material are provided at both end faces of the stator co re, and coils are wound around each of the slots of the stator core with the insulators inte rposed. Windings of the same phase are connected to each other by way of crossover wire s exposed from the slots on one end face of the stator core.

The coil employs a wire material obtained by coating a copper wire with an electrically in sulating film such as an enamel film (enameled wire, etc.), but there is a risk of the insul ating properties of the coil being impaired if there are any minute scratches on the electric ally-insulating film of the coil. For example, when an electric compressor used in a refrige ration cycle has a configuration in which the stator of the electric motor for driving a co mpression mechanism is fixed to an inner circumferential surface of a motor housing, there is a risk of crossover wires exposed at the coil ends being accidentally marked when or before the stator is mounted in the motor housing. The crossover wires are arranged towar d the outer circumference of the coil ends and are therefore at a short distance from the i nner wall of the housing, so there is a risk of electrical leakage from the coils to the hou sing if the coils are scratched.

There is known technology, disclosed in Patent Literature 1 and 2, for protecting the cross over wires of a stator.

Patent Literature 1 discloses a stator in a brushless motor, wherein coils are wound on the teeth of a stator core with a bobbin (insulator) interposed, and a holder (cover) is further attached to cover the bobbin. The holder is fixed by engaging locking hooks extending axi ally from a circumferential wall in locking grooves formed in the bobbin. By virtue of thi s structure, crossover wires of the same phase which are wound on the stator core with th e bobbin interposed are covered by the holder, therefore preventing the crossover wires fro m unexpectedly protruding, and an effect of protecting the coils at the coil ends protruding from the stator core can also be anticipated.

Patent Literature 2 discloses a stator of an electric motor for an electric compressor. That stator comprises: a stator core; insulators provided at both end portions of the stator core ( in Patent Literature 2, one of the insulators is referred to as an insulation element while t he other is referred to as a carrier element); coils wound around the stator core with the i nsulators interposed; and a cover mounted on said one of the insulators so as to cover the coils which are wound on said insulator. The cover is an electrically-insulating component . Said one of the insulators has a cylindrical wall, and line wires (crossover wires) of the coils are run through groove portions formed on an outer circumferential surface of this w all. The cover fully covers the line wires accommodated in the grooves, and protrusions fo rmed on the inner circumference of the cover are engaged in the grooves so that the cove r and the insulator are fixedly connected. As a result, the line wires are completely covere d by the insulating cover and it is therefore possible to ensure a sufficient insulating dista nce.

### [Prior Art Documents]

### [Patent Documents]

[Patent Document 1] JP 2004-215325 A
[Patent Document 2] JP 2019-221134 A

### [Summary of the Invention]

### [Problems to be Solved by the Invention]

The cover/insulator engaging structures of Patent Literature 1 and 2 both employ elastic en gagement of projections provided facing inner circumferentially of a cover with recesses pr ovided on the outer circumference of the insulator, and there is a risk of disengagement of the projection and the recess, causing the cover to detach, if a force acts such as to pull the cover away from the insulator. When the cover/insulator engaging structure is adopted in an inner rotor-type motor of an electric compressor used in a refrigeration cycle in parti cular, if the cover detaches due to vibration or the fluid force of a working fluid, etc. whi le the electric compressor is running, insulating properties will be lost without it being pos sible to detect the detachment.

The present invention has been devised in order to solve the problems above, and the obje ctive thereof lies in providing a motor stator which, by means of a cover, ensures insulati on between a motor housing and coil ends of coils wound around the stator, without the r isk of the cover detaching.

### [Means for Solving the Problems]

The reference symbols used in the appended drawings are added in parentheses in the desc ription below in order to make the present invention easier to understand, but this does no t limit the present invention to the forms depicted.

The present invention provides a motor stator (103) comprising: an annular stator core (11 0) capable of mating with an inner circumferential surface (20a) of a housing (20), and ha ving a plurality of teeth (112) formed on a radial inner side; an annular first insulator (12 0) provided on one end face (110a) of the stator core (110); an annular second insulator ( 130) provided on another end face (110b) of the stator core (110); and a plurality of cond ucting wires (140) wound around the teeth (112) with the first and second insulators (120, 130) interposed,
the conducting wires (140) comprising: coils (141) separately wound around the teeth (112) with concentrated windings, and a plurality of crossover wires (142) which connect the co ils (141) and are disposed along an outer circumferential surface (120d) of the first insulat or (120),
the crossover wires (142) being covered by a cover (210) formed by an electrically-insulati ng material,
the cover (210) comprising a tubular cylindrical body (211) covering the outer circumferent ial surface (120d) of the first insulator (120) where the crossover wires (142) are arranged, and
the cylindrical body (211) being held on the first insulator (120) by means of a locking m echanism (220), the motor stator being characterized in that
the locking mechanism (220) comprises: a locking projection (221) protruding radially outw ard from the outer circumferential surface (120d) of the first insulator (120); an elastic por tion (223) formed on the cylindrical body (211) in such a way as to be elastically deform able in a radial direction of the cylindrical body (211); and a locking recess (222) which i s provided in the elastic portion (223) and engages with the locking projection (221).

Preferably, an outer diameter (D1) of the cover (210) is set to be smaller than an outer di ameter (D2) of the stator core (110).

As another preferred example, a gap (Sp) between the elastic portion (223) and the inner circumferential surface (20a) of the housing (20) is set to be smaller than an amount of el astic deformation (δ) when the elastic portion (223) passes over the locking projection (221 ).

As another preferred example, the locking projection (221) has an inclined face (221a) whi ch is inclined radially outward from an axial first end face (120b) side of the first insulat or (120) toward a second end face (120a) side.

As a different preferred example, the cover (210) comprises a top plate (212) extending ra dially inward from a first end (211a) of the cylindrical body (211) so as to cover an axial first end face (120b) of the first insulator (120).

More preferably, the first insulator (120) comprises a positioning pin (231) extending from the first end face (120b) toward the top plate (212), and the top plate (212) comprises a p ositioning hole (232) penetrating so as to allow fitting of the positioning pin (231).

More preferably, the top plate (212) integrally comprises a biasing portion (213) which con tacts the first end face (120b) of the first insulator (120) and causes an axial preload to b e generated between the top plate (212) and the first end face (120b).

The present invention also preferably provides an electric compressor (10) comprising: a m otor (100) comprising the stator (103) and the housing (20); and a compression mechanism (50) which is driven by means of the motor (100) to compress a gas.

### [Effects of the Invention]

The present invention makes it possible to provide a motor stator which, by means of a c over, ensures insulation between a motor housing and coil ends of coils wound around the stator, without the risk of the cover detaching.

### [Brief Description of the Drawings]

[Fig. 1] is a view in cross section of an electric compressor according to an example.
[Fig. 2] is an enlargement around a first insulator and a cluster block shown in fig. 1.
[Fig. 3] Fig. 3A is an exploded main part oblique view of a stator core and the first insul ator shown in fig. 2; and fig. 3B is an end face view of the stator core shown in fig. 3A
[Fig. 4] schematically shows a wiring structure of a plurality of conducting wires shown in fig. 3B.
[Fig. 5] is an oblique view around a first insulator and a cluster block shown in fig. 1.
[Fig. 6] is an exploded main part oblique view of the first insulator and the cover shown in fig. 2.
[Fig. 7] is a view in cross section showing a relationship of the first insulator, the cover and the housing at the location of a positioning pin shown in fig. 6.
[Fig. 8] is a view in cross section showing a relationship of the first insulator and the co ver at the position of the biasing portion shown in fig. 6.
[Fig. 9] is an oblique view of a configuration in which the first insulator of the stator sho wn in fig. 1 is covered by the cover.
[Fig. 10] Fig. 10A is a view in cross section showing a relationship of the first insulator, the cover and the housing at the position of the locking mechanism shown in fig. 6, and f ig. 10B is a diagram showing the action of the locking mechanism shown in fig. 10A.

### [Embodiments of the Invention]

Embodiments of the present invention will be described below with reference to the appen ded drawings. It should be noted that the forms depicted in the appended drawings are exa mples of the present invention, and the present invention is not limited to those forms.

### <Example>

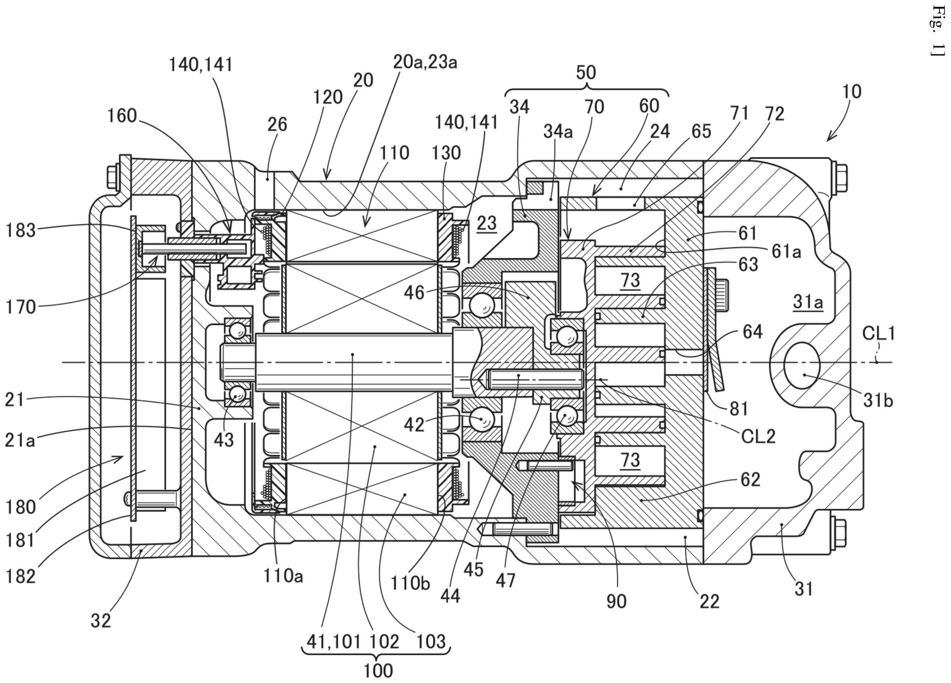

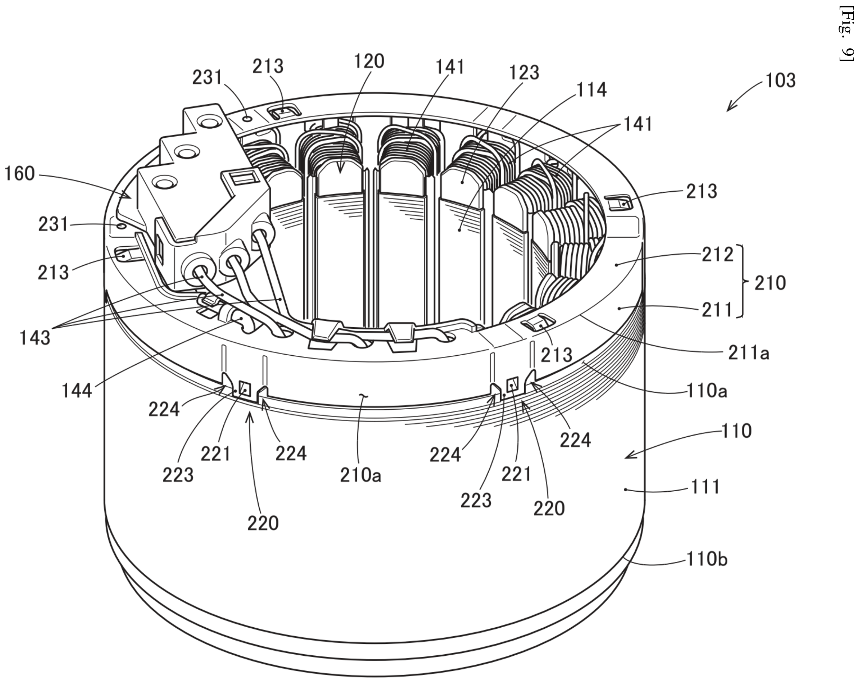

A stator 103 and an electric compressor 10 comprising the stator 103 according to an exa mple will be described with reference to fig. 1-10.

As shown in fig. 1, the electric compressor 10 is suitable for use in a refrigeration cycle employing a refrigerant as a working fluid, and is employed in the refrigeration cycle of a n automotive air conditioning device, for example. It should be noted that there is no limit ation to the purpose of use of the electric compressor 10.

The electric compressor 10 comprises, for example: a housing 20 which can be installed h orizontally; a compression mechanism 50 for compressing a gas (e.g., a gaseous refrigerant ); and a motor 100 for driving the compression mechanism 50.

The housing 20 is a bottomed cylindrical member and is closed at one end by means of a bottom wall 21 and completely open at another end. That is to say, an opening portion 2 2 is provided at the other end of the housing 20. The opening portion 22 is closed by an openable/closable head member 31. The housing 20 is constructed by a cast piece made of a metallic material such as aluminum (including aluminum alloy).

An inverter housing 32 is placed over and assembled with an outer wall surface 21a of th e bottom wall 21 of the housing 20. An inverter device 180 for supplying drive power to the motor 100 is accommodated in the inverter housing 32.

The housing 20 internally comprises a first accommodating chamber 23 on the bottom wall 21 side and a second accommodating chamber 24 on the opening portion 22 side. The fir st and second accommodating chambers 23, 24 are continuous in a longitudinal direction (a xial direction) of the housing 20. The motor 100 is housed in the first accommodating cha mber 23. The compression mechanism 50 is at least partly (e.g., completely) accommodate d in the second accommodating chamber 24.

The housing 20 further comprises an intake port 26 for taking the refrigerant into the first accommodating chamber 23 from the outside. The head member 31 comprises: a discharge chamber 31a for discharging compressed refrigerant from a compression chamber 73; an oil separation chamber 31b for separating oil from the refrigerant compressed by means of th e compression mechanism 50; and a discharge port (not depicted) for discharging to the ou tside the gaseous refrigerant from which the oil has been separated by means of the oil se paration chamber 31b.

A partition is formed between the first accommodating chamber 23 and the second accom modating chamber 24 by means of a disc-shaped partition member 34. The partition memb er 34 restricts both relative rotation and relative movement in the axial direction with resp ect to the housing 20. The first accommodating chamber 23 may also be referred to as the "low-pressure chamber 23". The partition member 34 comprises a plurality of intake holes 34a providing communication between the first accommodating chamber 23 and the secon d accommodating chamber 24. It should be noted that the partition member 34 may be co nsidered as a component of the compression mechanism 50.

A drive shaft 41 positioned on the center line CL1 in the longitudinal direction of the hou sing 20 is provided in the first accommodating chamber 23. The drive shaft 41 includes b oth a configuration in which it also serves as an output shaft 101 of the motor 100, and a configuration in which it is a separate member (not depicted) from the output shaft 101 of the motor 100. In the description given here, the drive shaft 41 is configured to also s erve as the output shaft 101 of the motor 100. The center line CL1 in the longitudinal dir ection of the housing 20 may also be referred to as the "center line CL1 of the drive shaf t 41 (output shaft 101)".

The drive shaft 41 runs through the partition member 34 from the first accommodating cha mber 23 toward the second accommodating chamber 24, and is rotatably supported by mea ns of a first bearing 42 provided in the partition member 34, and a second bearing 43 pro vided in the bottom wall 21 of the housing 20. The drive shaft 41 further comprises an e ccentric shaft 44 on one end face penetrating the partition member 34. The eccentric shaft 44 extends from one end face of the drive shaft 41 toward the compression mechanism 50 and is parallel with the drive shaft 41. A center line CL2 of the eccentric shaft 44 is off set from the center line CL1 of the drive shaft 41. An annular bush 45 is rotatably mated with the eccentric shaft 44. A counterweight 46 protruding radially from the bush 45 is int egrally provided with a portion of the bush 45.

The compression mechanism 50 comprises a pair of scroll members 60, 70 accommodated in the second accommodating chamber 24.

The fixed scroll 60 comprises a disc-shaped fixed plate 61, a cylindrical outer circumferent ial wall 62, and a spiral-shaped fixed volute wall 63. The fixed plate 61 comprises a disc harge hole 64 in a central part thereof. The outer circumferential wall 62 is a cylindrical part standing upright integrally along the whole circumference of the fixed plate 61, from an outer edge of one plate face 61a to the partition member 34 side. A refrigerant intake port 65 for taking the refrigerant from radially outward to inward is formed in the outer c ircumferential wall 62. The fixed volute wall 63 stands upright integrally from said one pl ate face 61a of the fixed plate 61 toward the partition member 34 side. The fixed scroll 6 0 is supported between the head member 31 and the partition member 34 so as to be inca pable of relative rotation, and so that the fixed plate 61 is oriented orthogonally to the ce nter line CL2 of the eccentric shaft 44.

The movable scroll 70 comprises a disc-shaped movable plate 71, and a spiral-shaped mov able volute wall 72. The outer diameter of the movable plate 71 is formed with a size tha t does not cause interference even when the movable scroll 70 orbits at a predetermined e ccentric radius inside the outer circumferential wall 62 of the fixed scroll 60. The movable volute wall 72 stands upright integrally from the movable plate 71 toward the plate face 61a of the fixed plate 61. A third bearing 47 is fitted in the center of the movable plate 71. An outer circumferential surface of the bush 45 mates with an inner circumferential su rface of the third bearing 47.

The compression mechanism 50 further comprises a rotation preventing mechanism 90 for preventing the movable scroll 70 from rotating itself.

Compression chambers 73 enclosed by the plates 61, 71 and the volute walls 63, 72 are f ormed by engagement of the fixed volute wall 63 and the movable volute wall 72.

Rotation of the drive shaft 41 enables the center of the movable scroll 70 to eccentrically rotate via the bush 45 and third bearing 47 mated with the eccentric shaft 44. That is to say, rotation of the drive shaft 41 causes the movable scroll 70 to orbit. As a result, the r efrigerant taken in from the intake port 26 passes through the gap in the motor 100 inside the low-pressure chamber 23, and is taken into the compression chambers 73 through the refrigerant intake port 65 of the fixed scroll 60 via the intake holes 34a in the partition m ember 34. As the movable scroll 70 orbits, the compression chambers 73 steadily move to ward the center while the internal volume thereof decreases. The refrigerant inside the com pression chambers 73 is compressed by this means. When the pressure inside the compress ion chambers 73 that have moved to the center rises to a pressure greater than the pressur e inside the discharge chamber 31a, a discharge valve 81 opens due to the pressure differe nce and the refrigerant inside the compression chambers 73 flows into the discharge chamb er 31a through the discharge hole 64. The refrigerant inside the discharge chamber 31a is discharged to the outside from a discharge port (not depicted) via the oil separation chamb er 31b.

As indicated above, the motor 100 is accommodated in the housing 20. The motor 100 co mprises: the output shaft 101 (drive shaft 41), a rotor 102 fixed to the output shaft 101, a nd an annular stator 103 surrounding the circumference of the rotor 102.

The rotor 102 is rotatable about a center line CL1 of the output shaft 101. The stator 103 is disposed radially outside the rotor 102 and is fixed to an inner circumferential surface 20a of the housing 20 (inner circumferential surface 23a of the first accommodating chamb er 23). For example, the stator 103 is fixed to the inner circumferential surface 20a of the housing 20 by "interference fit" mating with the inner circumferential surface 20a. A shri nk fit and a press-fit, etc. may be cited as examples of the method of interference fit.

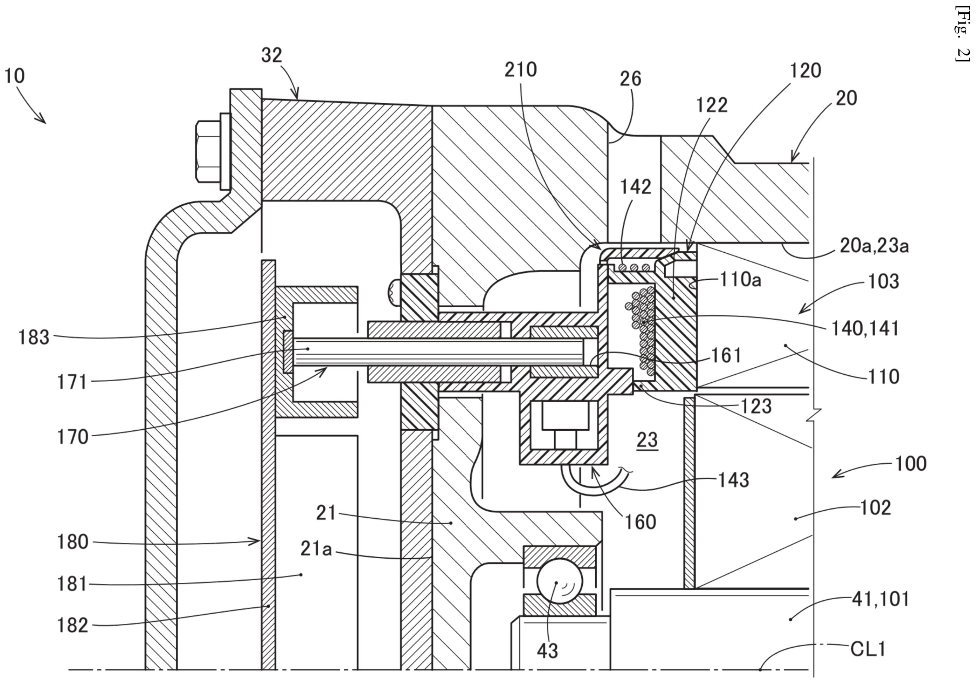

As shown in fig. 1 and 2, the stator 103 comprises: an annular stator core 110; first and second insulators 120, 130; and a plurality of conducting wires 140. The first and second insulators 120, 130 (first and second insulating bodies 120, 130) are provided at both end faces 110a, 110b of the stator core 110. The center line CL1 of the output shaft 101 may also be referred to as the "center line CL1 of the stator core 110".

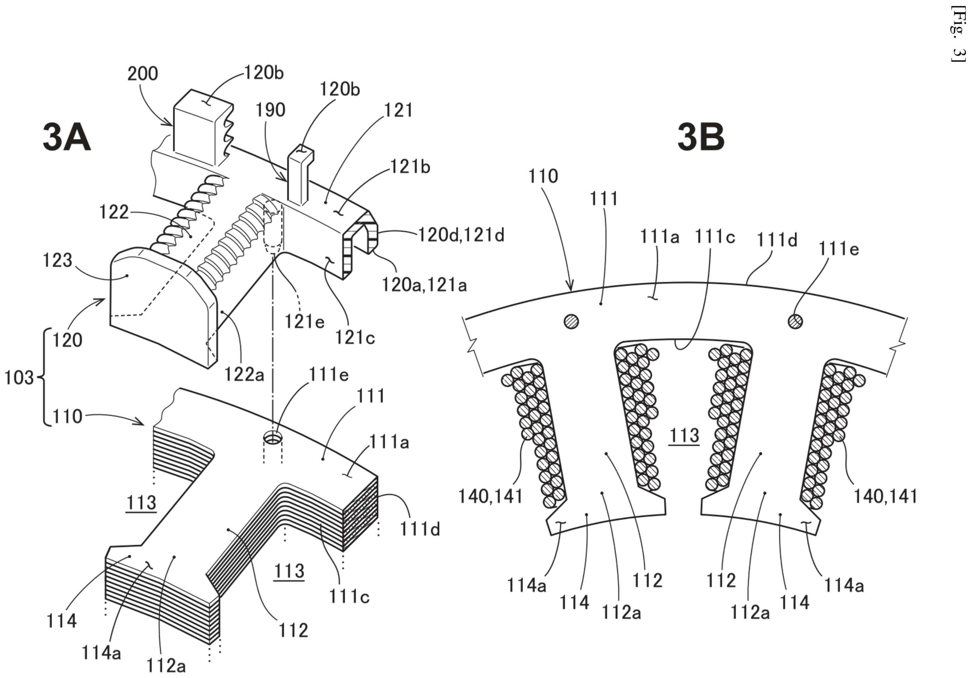

As shown in fig. 3A and 3B, the stator core 110 is formed by a laminated structure comp rising ferromagnetic plates such as magnetic steel plates. The stator core 110 comprises: a toric back yoke 111; and a plurality of teeth 112 protruding from an inner circumferential surface 111c of the back yoke 111 toward the center line CL1 of the stator core 110. The teeth 112 are arrayed at an equal pitch in the circumferential direction of the stator 103. Slots 113 are formed between teeth 112, 112 which are adjacent to each other in the circu mferential direction of the stator core 110. The teeth 112 have a teeth-side flange 114 at a free end 112a on a radially inner side. The teeth-side flanges 114 extend circumferentially so as to narrow circumferential openings of the slots 113.

The first insulator 120 is an annular member provided on the end face 110a of the stator core 110 on the inverter device 180 (see fig. 2) side, and is configured by an electrically-i nsulating resin molded part. The first insulator 120 is formed with the same shape as the stator core 110 (including the plurality of teeth 112) when the stator core 110 is viewed a long the center line CL1.

To describe this more specifically, the first insulator 120 comprises: an annular base portio n 121 lying over an axial end face 111a of the back yoke 111 of the stator core 110; an d a plurality of extensions 122 which extend radially inward from the base portion 121 an d lie over the axial end face 112a of the plurality of teeth 112.

More specifically, one end face 121a (base end face 121a) of the base portion 121 lies ov er the axial end face 111a of the back yoke 111. Said one end face 121a of the base port ion 121 is referred to as a "second end face 121a", and a face 121b on the opposite side to the second end face 121a is referred to as an "axial first end face 121b". The diameter of an inner circumferential surface 121c of the base portion 121 is set to be the same as or slightly larger than the diameter of the inner circumferential surface 111c of the back y oke 111. The diameter of an outer circumferential surface 121d of the base portion 121 is set to be the same as or slightly smaller than the diameter of an outer circumferential surf ace 111d of the back yoke 111. The outer circumferential surface 121d of the base portion 121 constitutes an outer circumferential surface 120d of the first insulator 120.

The extension 122 comprises a circumferentially-extending extension-side flange 123 at a fr ee end 122a on the radial inner side. The extension-side flange 123 lies over an axial end face 114a of the teeth-side flange 114.

A plurality of holes 111e for engaging with the first insulator 120 are further formed in t he axial end face 111a of the back yoke 111. Meanwhile, a plurality of protrusions 121e f or engaging in the holes 111e are provided in the annular base portion 121 of the first ins ulator 120. By engaging the protrusions 121e in the holes 111e, the first insulator 120 can be attached at the correct position on the axial end face 110a (see fig. 2) of the stator c ore 110.

Coils 141 of the conducting wires 140 are wound around the teeth 112 and the extensions 122. In addition, radial movement of the coils 141 is restricted by the inner circumferentia l surface 111c of the back yoke 111 and the inner circumferential surface 121c of the ann ular base portion 121, and by the teeth-side flange 114 and the extension-side flange 123. Moreover, an electrically insulating sheet (not depicted) may be interposed between the teet h 112 and the coils 141.

The second insulator 130 shown in fig. 1 has the same configuration as the first insulator 120, being an annular member provided on the end face 110b of the stator core 110 on th e compression mechanism 50 side, and being configured by an electrically-insulating resin molded part. The second insulator 130 is formed with the same shape as the stator core 1 10 when the stator core 110 is viewed along the center line CL1. However, the two insula tors 120, 130 may have differently shaped annular base portions 121.

In the description given below, only the first insulator 120 will be described out of the tw o insulators 120, 130. However, the shape of the extensions 122 on which the coils 141 a re wound and the shape of the extension-side flanges 123 are the same for the two insulat ors 120, 130.

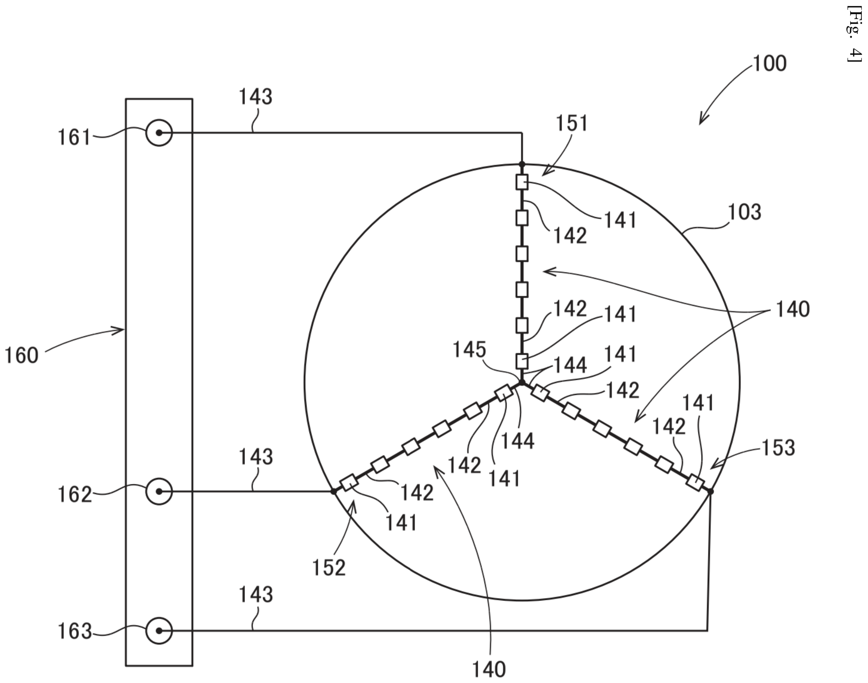

Fig. 4 schematically shows a wiring structure of the plurality of conducting wires 140 sho wn in fig. 3B. The motor 100 is configured by a three-phase AC brushless motor, for exa mple. The conducting wires 140 are wound around the plurality of teeth 112 (see fig. 3B) and constitute U phase, V phase and W phase windings groups 151-153 for three-phase alt ernating current. That is to say, there are three conducting wires 140. The conducting wire s 140 comprise, in the respective windings groups 151-153, a plurality of coils 141 (windi ngs 141) separately wound around the teeth 112 with concentrated windings, and a pluralit y of crossover wires 142 connecting the coils 141. The conducting wires 140 further comp rise a plurality of lead-out wires 143, 144 leading out from winding starts and winding en ds of the coils 141. Here, the lead-out wires 143, 144 leading out from the winding starts and winding ends of the coils 141 is the same concept as "the lead-out wires 143, 144 le ading out from winding starts and winding ends of the conducting wires 140 on the teeth 112".

All of the first and second lead-out wires 143, 144 in the multiple windings groups 151-1 53 have a star connection. The first lead-out wires 143 constitute power supply wires whic h are separately connected to three terminals 161-163 of a cluster block 160 (electrical con nector 160).

All of the second lead-out wires 144 are consolidated with each other by means of solderi ng or welding so as to be electrically conducting. A part 145 where all of the second lea d-out wires 144 are consolidated constitutes a "neutral point 145 of the star connection". E ach second lead-out wire 144 may also be referred to as a "neutral wire 144", as appropri ate.

The structure for connecting the first and second lead-out wires 143 and the inverter devic e 180 will be described here with reference to fig. 2. The first insulator 120 accommodate d in the first accommodating chamber 23 faces and is proximal to the bottom wall 21 of the housing 20.

A relay terminal 170 comprising three terminal pins 171 is provided on the bottom wall 2 1 of the housing 20. The terminal pins 171 extend along the center line CL1 of the stator core 111 from inside the housing 20 to inside the inverter housing 32. The three terminal s 161-163 (see also fig. 4) of the cluster block 160 can be mated with one end portion of each of the terminal pins 171.

The inverter device 180 comprises a board 182 on which control components 181 such as an inverter circuit are mounted, and an inverter-side connector 183 provided on the board 182. The inverter-side connector 183 is connectable to another end portion of each termina l pin 171.

By assembling the stator 103 inside the housing 20, the three terminals 161-163 are separa tely mated with each of the terminal pins 171. The inverter device 180 is assembled insid e the inverter housing 32, whereby the inverter-side connector 183 is connected to each ter minal pin 171. As a result, the first lead-out wires 143 are electrically connected to the in verter device 180. Driving electrical power can be supplied from the inverter device 180 t o the motor 100.

The structure for arranging the crossover wires 142 and the lead-out wires 143, 144 with r espect to the first insulator 120 will be described next.

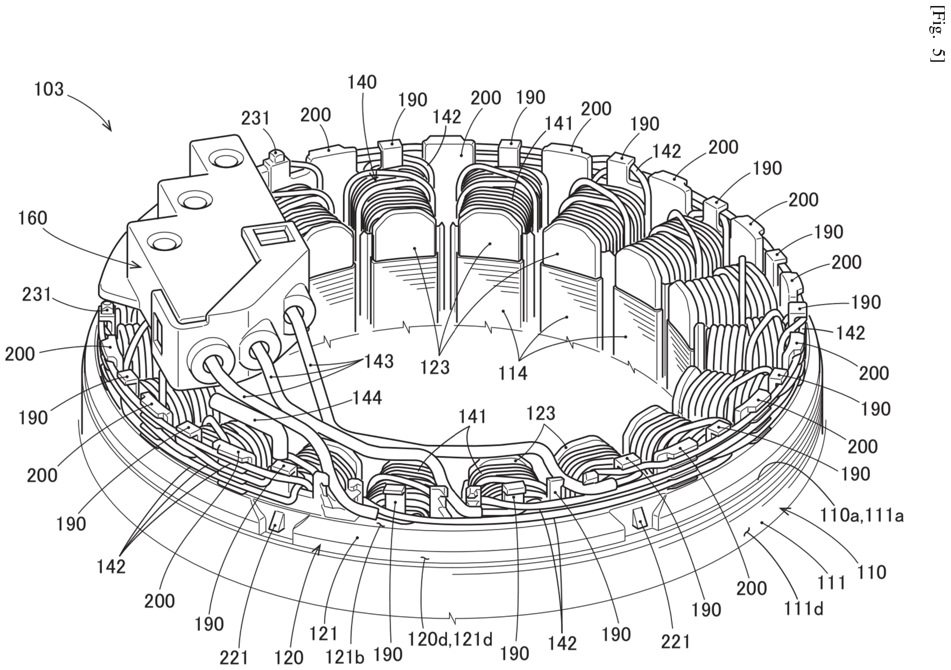

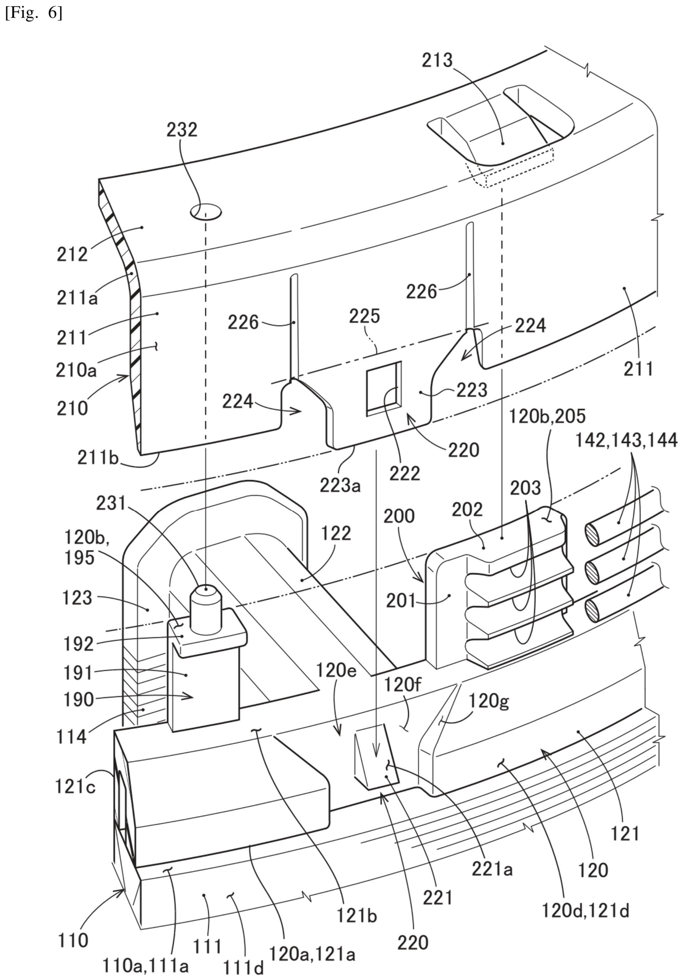

As shown in fig. 5 and 6, all of the crossover wires 142 and all of the lead-out wires 14 3, 144 are arranged along the outer circumferential surface 120d of the first insulator 120. For example, the crossover wires 142 and the lead-out wires 143, 144 are held by means of a plurality of wire holding portions 190, 200 of the first insulator 120. The wire holdin g portions 190, 200 are arranged in a circumferential direction of the base portion 121, wh ile also extending from the axial first end face 121b of the base portion 121 to the invert er device 180 (see fig. 1) side, i.e., the opposite side to the second end face 121a. The w ire holding portions 190, 200 are integrally formed with the base portion 121.

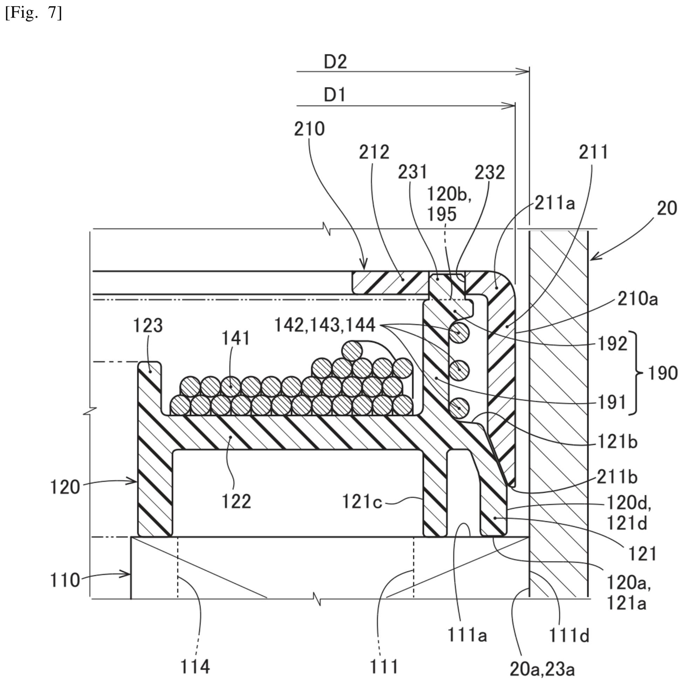

As shown in fig. 6 and 7, the first wire holding portion 190 has an inverted L-shaped con figuration when seen from the side, and comprises: a vertical plate-shaped support portion 191 extending from the first end face 121b of the base portion 121 to the inverter device 180 (see fig. 1) side; and a flat plate-shaped holding portion 192 extending radially outwar d of the base portion 121 from a tip end of the support portion 191. One plate face of th e support portion 191 faces radially outward of the base portion 121.

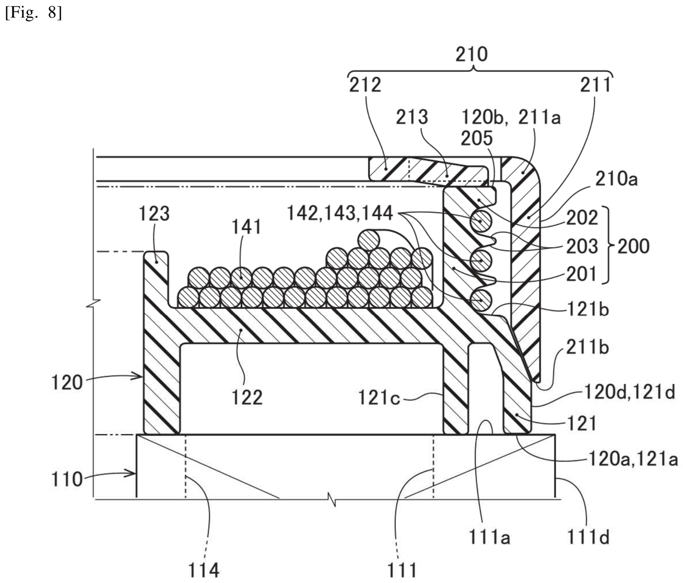

As shown in fig. 6 and 8, the second wire holding portion 200 has an inverted L-shaped configuration when seen from the side, and comprises: a vertical plate-shaped support porti on 201 extending from the first end face 121b of the base portion 121 to the inverter dev ice 180 (see fig. 1) side; a flat plate-shaped holding portion 202 extending radially outwar d of the base portion 121 from a tip end of the support portion 201; and a plurality of h olding grooves 203 formed in a radially outside face of the support portion 201. One plate face of the support portion 201 faces radially outward of the base portion 121.

As shown in fig. 5 and 6, end faces 195, 205 of all of the holding portions 190, 200 (the faces 195, 205 on the opposite side to the second end face 121a) are parallel to the seco nd end face 121a of the base portion 121. Moreover, the height from the second end face 121a of the base portion 121 to the end faces 195, 205 of the holding portions 190, 200 i s the same in all cases. The end faces 195, 205 of the holding portions 190, 200 constitut e an axial first end face 120b of the first insulator 120. Meanwhile, the second end face 1 21a of the base portion 121 constitutes an axial second end face 120a of the first insulato r 120. It should be noted that the first wire holding portion 190 and the second wire hold ing portion 200 are arranged at an interval in the circumferential direction of the base port ion 121, as shown in fig. 6, but may equally be continuous in the circumferential direction of the base portion 121.

The crossover wires 142 and the lead-out wires 143, 144 being held by the respective hol ding portions 190, 200 are positioned radially inward of the outer circumferential surface 1 21d of the base portion 121 (the outer circumferential surface 120d of the first insulator 1 20), and are also positioned on the stator core 110 side of the end faces 195, 205 of the holding portions 190, 200 (the first end face 120b of the first insulator 120).

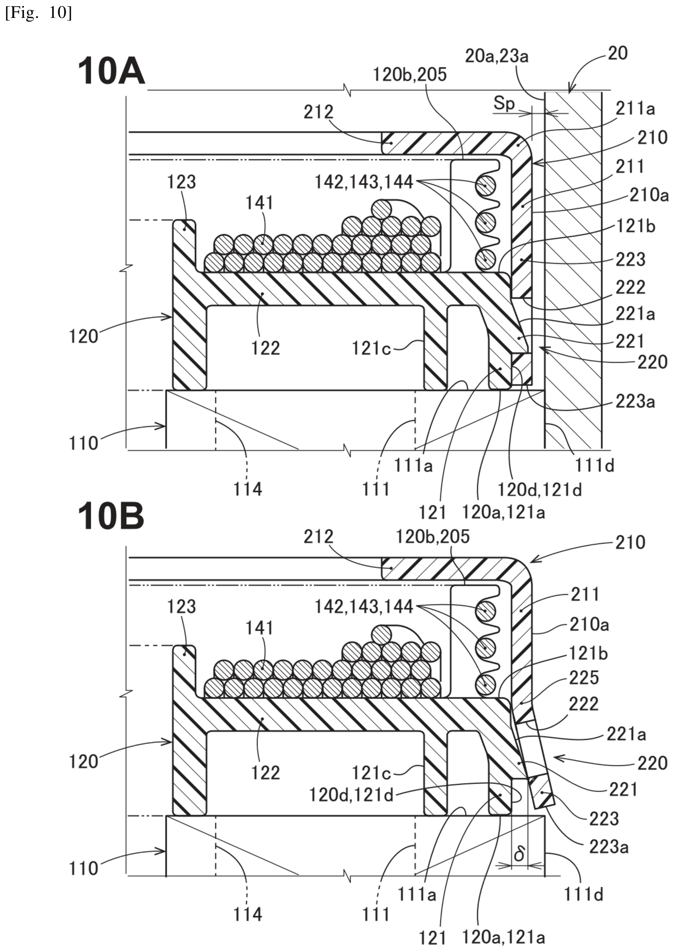

As shown in fig. 7 and 10A, the crossover wires 142, 143 are arranged at the outer circu mferential surface 120d of the first insulator 120 (outer circumferentially from the coil end s), and are therefore at a short distance from the inner circumferential surface 20a of the housing 20.

As shown in fig. 6, 7 and 9, all of the crossover wires 142, 143 disposed in the first ins ulator 120 are covered by an electrically-insulating resin cover 210, for example, which is formed by an electrically insulating material. The cover 210 comprises a tubular cylindrical body 211 covering the outer circumferential surface 120d of the first insulator 120 where the crossover wires 142 are arranged. This makes it possible to prevent the crossover wire s 142, 143 from being accidentally scratched when the stator 103 having the coils 141 wo und thereon is inserted into the housing 20 (motor housing 20).

As shown in fig. 6, 7 and 9, the cover 210 further comprises an annular top plate 212 co vering the axial first end face 120b of the first insulator 120. The top plate 212 is integra lly formed with the first end face 211a of the cylindrical body 211. In other words, the c over 210 comprises the top plate 212 extending radially inward from a first end 211a of t he cylindrical body 211 so as to cover the axial first end face 120b of the first insulator 120 That is to say, the cover 210 is formed by the cylindrical body 211 and the top plate 212. The distance along the surface of the top plate 212 is therefore included in a creepa ge distance from the housing 20 to the crossover wires 142, making it possible to further lengthen the creepage distance. As a result, it is possible to enhance the electrical insulatio n performance of the cover 210 with respect to the housing 20.

Moreover, as shown in fig. 7, the top plate 212 covers the first end face 120b of the first insulator 120 and an outer circumferential part of the extension 122, but does not cover a part of the extension 122 radially inward from an intermediate portion thereof. That is to say, the slots 113 (see fig. 3B) of the stator core 110 are not completely covered by the t op plate 212, and there is no obstruction to the flow of refrigerant passing through the slo ts 113.

As shown in fig. 5, 9 and 10A, the cylindrical body 211 is locked to the first insulator 1 20 by means of a locking mechanism 220. The locking mechanism 220 is formed by mati ng (engagement) of a locking projection 221 (locking hook 221) protruding radially outwar d from the outer circumferential surface 120d of the first insulator 120, with a locking rec ess 222 formed in the cylindrical body 211 of the cover 210.

To describe this more specifically, the locking recess 222 is constructed by providing a ca vity or a through-hole in the elastic portion 223 which is integrally formed on a circumfer ential portion of the cylindrical body 211 (the locking recess 222 is provided in the elastic portion 223). As shown in fig. 6, the elastic portion 223 is formed by providing two cut outs 224, 224 having line symmetry from the end face 211b of the cylindrical body 211 t oward the side opposite to the stator core 110, and by extending an area therebetween furt her to the stator core 110 side than the end face 211b of the cylindrical body 211. This makes an area from a base end portion 225 to an end face 223b of the elastic portion 22 3 elastically deformable. Furthermore, vertical grooves 226, 226 may also be formed from the cutouts 224, 224 to the vicinity of the first end 211a of the cylindrical body 211.

As shown in fig. 6, the locking projection 221 is formed on a bottom face 120f of a rece ss 120e which is indented radially inward from the outer circumferential surface 120d of t he first insulator 120. The recess 120e has tapered guide walls 120g which widen from th e second end face 121a side of the base portion 121 toward the first end face 121b, with the bottom face 120f of the recess 120e being viewed from radially outside the first insula tor 120. When the elastic portion 223 has been inserted into the recess 120e from the end face 223a side, the elastic portion 223 can therefore be circumferentially positioned by the guide walls 120g. The mating position of the locking projection 221 with the locking reces s 222 is automatically established, therefore facilitating the locking operation.

As shown in fig. 10A and 10B, when the cylindrical body 211 is mated with the first ins ulator 120, the elastic portion 223 is pushed radially outward by the inclined face 221a of the locking projection 221. When the locking recess 222 moves as far as the position of t he locking projection 221, the elastic portion 223 is restored to its original radial position by its own elasticity. The locking projection 221 is therefore quickly locked in the locking recess 222. It is possible to provide a stator 103 which, by means of the cover 210, ens ures insulation between the housing 20 and the plurality of crossover wires 142, 143 conn ecting the plurality of coils 141 wound around the stator 103, without the risk of the cove r 210 detaching.

As shown in fig. 6 and 10A, the locking projection 221 has the inclined face 221a which is inclined radially outward from the first end face 120b side of the first insulator 120 to ward the second end face 120a side. The locking projection 221 comprises the inclined fac e 221a, so the locking recess 222 can be smoothly fitted to the locking projection 221.

As shown in fig. 7, an outer diameter D1 of the cover 210 is set to be smaller than an o uter diameter D2 of the stator core 110. The outer diameter D1 of the cover 210 is small er than the outer diameter D2 of the stator core 110, so the stator 103 to which the first insulator 120 and the cover 210 are attached can be easily fitted into the housing 20 with out any interference between the cover 210 and the housing 20.

As shown in fig. 10A, the inner diameter of the housing 20 in this example (the diameter of the inner circumferential surface 20a of the housing 20) is set so that a part to which t he outer circumferential surface 111d of the stator core 110 is fixed and a part correspond ing to the outer circumferential surface 210a of the cover 210 have the same diameter. Ho wever, the inner diameter of the housing 20 is not limited to being the same diameter, as long as the diameter is of a size that does not interfere with the cover 210. For example, the inner diameter of the housing 20 may also be set so that an area corresponding to the outer circumferential surface 210a of the cover 210 is slightly smaller than an area corres ponding to the outer circumferential surface 111d of the stator core 110.

As shown in fig. 10A and 10B, a gap Sp between the elastic portion 223 and the inner ci rcumferential surface 20a of the housing 20 is set to be smaller than an amount of elastic deformation δ when the elastic portion 223 passes over the locking projection 221. Conseq uently, even if a force such as to separate the cover 210 from the first insulator 120 were to act after the stator 103 has been fixed to the housing 20, the elastic portion 223 woul d contact the inner circumferential surface 20a of the housing 20 and act to ensure that th e locking recess 222 does not detach from the locking projection 221. The locked state of the locking mechanism 220 can therefore be stably maintained.

As shown in fig. 6 and 8, the top plate 212 integrally comprises the biasing portion 213. This biasing portion 213 is a member which contacts the first end face 120b of the first i nsulator 120 and causes an axial preload to be generated between the top plate 212 and th e first end face 120b. The biasing portion 213 has a cantilevered configuration formed by making an incision in part of the resin top plate 212, for example. As a result, the biasin g portion 213 has elasticity in a plate face direction. As shown in fig. 8, a free end of th e biasing portion 213 is bent to the first end face 120b side of the first insulator 120, an d can thereby apply axial precompression to the first end face 120b.

By providing the biasing portion 213 integrally with the top plate 212, it is possible to ge nerate a biasing force in a direction such that the top plate 212 separates from from the fi rst insulator 120. It is therefore possible to prevent the mating parts of the locking mecha nism 220 (see fig. 10A) from generating a rattling noise or becoming worn due to vibratio n during operation.

As shown in fig. 6 and 7, the first insulator 120 comprises a positioning pin 231 extendin g from the first end face 120b toward the top plate 212. The top plate 212 comprises a p ositioning hole 232 penetrating so as to allow fitting of the positioning pin 231. The positi on at which the locking projection 221 is locked in the locking recess 222 is therefore aut omatically established simply by fitting the positioning pin 231 into the positioning hole 2 32. Moreover, the position of the positioning hole 232 in relation to the positioning pin 23 1 is visible, therefore facilitating the positioning operation.

A summary of the description above is as follows. As shown in fig. 1 and 2, the electric compressor 10 comprises a motor 100, which comprises the motor stator 103 of the presen t invention and the housing 20, and a compression mechanism 50 which is driven by mea ns of the motor 100 to compress a gas. Insulation between the housing 20 and the pluralit y of crossover wires 142 connecting the plurality of coils 141 wound around the stator 10 3 can therefore be ensured by means of the cover 210 in the electric compressor 10 used in a refrigeration cycle.

It should be noted that the present invention is not limited to the example, provided that t he actions and effects of the present invention are demonstrated.

For example, the lead-out wires 143, 144 in the multiple windings groups 151-153 may be connected to the terminals 161-163 of the cluster block 160 with a delta connection.

Furthermore, the compression mechanism 50 is not limited to a scroll-type compression me chanism, and may also be a rolling piston-type compression mechanism, for example.

### [Industrial Applicability]

The electric compressor 10 comprising the motor stator 103 according to the present invent ion is suitable for use in a refrigeration cycle of a vehicle air conditioning device.

### [Key to Symbols]

- 10: Electric compressor
- 20: Housing
- 20a: Inner circumferential surface of housing
- 50: Compression mechanism
- 100: Motor
- 103: Stator
- 110: Stator core
- 110a: One end face
- 110b: Other end face
- 112: Teeth
- 120: First insulator
- 120a: Second end face
- 120b: First end face
- 130: Second insulator
- 140: Conducting wire
- 141: Coil
- 142: Crossover wire
- 210: Cover
- 211: Cylindrical body
- 211a: Tip end
- 212: Top plate
- 213: Biasing portion
- 220: Locking mechanism
- 221: Locking projection
- 221a: Inclined face
- 222: Locking recess
- 223: Elastic portion
- 231: Positioning pin
- 232: Positioning hole
- D1: Outer diameter of cover
- D2: Outer diameter of stator core
- Sp: Gap between elastic portion and inner circumferential surface of housing
- δ: Amount of elastic deformation when elastic portion passes over locking projection

## Claims

1. A motor stator (103) comprising: an annular stator core (110) capable of mating with an i nner circumferential surface (20a) of a housing (20), and having a plurality of teeth (112) formed on a radial inner side;
an annular first insulator (120) provided on one end face (110a) of the stator core (110);
an annular second insulator (130) provided on another end face (110b) of the stator core ( 110); and
a plurality of conducting wires (140) wound around the teeth (112) with the first and seco nd insulators (120, 130) interposed,
the conducting wires (140) comprising: coils (141) separately wound around the teeth (112) with concentrated windings, and a plurality of crossover wires (142) which connect the co ils (141) and are disposed along an outer circumferential surface (120d) of the first insulat or (120),
the crossover wires (142) being covered by a cover (210) formed by an electrically-insulati ng material,
the cover (210) comprising a tubular cylindrical body (211) covering the outer circumferent ial surface (120d) of the first insulator (120) where the crossover wires (142) are arranged,
and
the cylindrical body (211) being held on the first insulator (120) by means of a locking m echanism (220), the motor stator being **characterized in that**
the locking mechanism (220) comprises:
a locking projection (221) protruding radially outward from the outer circumferential surfac e (120d) of the first insulator (120);
an elastic portion (223) formed on the cylindrical body (211) in such a way as to be elast ically deformable in a radial direction of the cylindrical body (211); and
a locking recess (222) which is provided in the elastic portion (223) and engages with the locking projection (221).

2. The motor stator as claimed in claim 1, wherein an outer diameter (D1) of the cover (210 ) is set to be smaller than an outer diameter (D2) of the stator core (110).

3. The motor stator as claimed in claim 1, wherein a gap (Sp) between the elastic portion (2 23) and the inner circumferential surface (20a) of the housing (20) is set to be smaller tha n an amount of elastic deformation (δ) when the elastic portion (223) passes over the lock ing projection (221).

4. The motor stator as claimed in claim 1, wherein the locking projection (221) has an inclin ed face (221a) which is inclined radially outward from an axial first end face (120b) side of the first insulator (120) toward a second end face (120a) side.

5. The motor stator as claimed in claim 1, wherein the cover (210) comprises a top plate (21 2) extending radially inward from a first end (211a) of the cylindrical body (211) so as to cover an axial first end face (120b) of the first insulator (120).

6. The motor stator as claimed in claim 5, wherein the first insulator (120) comprises a posit ioning pin (231) extending from the first end face (120b) toward the top plate (212), and the top plate (212) comprises a positioning hole (232) penetrating so as to allow fitting of the positioning pin (231).

7. The motor stator as claimed in claim 5, wherein the top plate (212) integrally comprises a biasing portion (213) which contacts the first end face (120b) of the first insulator (120) a nd causes an axial preload to be generated between the top plate (212) and the first end f ace (120b).

8. An electric compressor (10) comprising: a motor (100) comprising the motor stator (103) a s claimed in any one of claims 1 to 7 and the housing (20); and a compression mechanis m (50) which is driven by means of the motor (100) to compress a gas.
